# EUROPEAN PATENT APPLICATION

(11) **EP 4 810 219 A1**
(43) Date of publication of application: **23.09.2026**
(21) Application number: 26158675.4
(22) Date of filing: 16.02.2026
(51) Int. Cl.: B29C 37/00, B29D 11/00, G02C 7/12

(54) **OPTICAL COMPOSITE MOLDING AND PRODUCTION METHOD THEREOF**

(30) Priority: 19.03.2025 JP 2025044195
(71) Applicant: Yamamoto Kogaku Co., Ltd., Osaka 577-0056 (JP)
(72) Inventor: ASADA, Masataka, Osaka, 5770056 (JP); KAWANISHI, Noboru, Osaka, 5770056 (JP)
(74) Representative: SSM Sandmair

(57) **Abstract**

Provided is an optical composite molding, and production method thereof, that can suppress the occurrence of problems when producing an optical article by insert molding a composite sheet having an optical functional layer and a protective layer into a backup material, without relying on special molding methods such as compression molding or injection compression molding. An optical composite molding 1 is formed by bonding a composite sheet 10 including a first protective layer 11 on a front side, a second protective layer 12 on a back side, and an optical functional layer 13 sandwiched between the two protective layers, with a backup material 20 that supports the composite sheet 10 from the back side. A first thickness (L1) of the first protective layer 11 is 0.05 to 0.30 mm. A second thickness (L2) of the second protective layer 12 is 0.30 to 0.70 mm.

## Description

### BACKGROUND OF THE INVENTION

### Field of the Invention

The present invention relates to an optical composite molding and a production method thereof, and more particularly to an optical composite molding having an optical function such as polarization or photochromism, and a production method thereof.

### Description of the Related Art

To impart an optical function such as polarization or photochromism to an optical article such as a lens visor or shield for motorcycle helmets or an eyeglass lens, an optical functional layer having a specific optical function is incorporated into the optical article by insert molding. In the optical article described in International Publication No. WO2016/158680, the optical article is produced as an optical composite molding by bonding a composite sheet including an optical functional layer and a protective layer that protects the optical functional layer to a resin lens body as a backup material by insert molding.

### SUMMARY OF THE INVENTION

In the optical composite molding described in International Publication No. WO2016/158680, the composite sheet has two protective layers, namely, a first protective layer on a front side exposed to the outside air, and a second protective layer on a back side of the composite sheet, with an optical functional layer sandwiched between them. Of the two protective layers arranged on the front and back sides of the composite sheet, the second protective layer arranged on the back side is fused to and integrated with a backup material. On the other hand, the first protective layer arranged on the front side of the composite sheet retains its original shape.

However, in the optical composite molding described in International Publication No. WO2016/158680, the functional protective layers of the composite sheet, and in particular the peripheral portion of the first protective layer on the front side, can be degraded by the high-temperature resin feedstock of the backup material poured into the mold, causing problems with the appearance and performance of the optical article. To prevent the functional protective layers from degrading, special molding methods such as compression molding and injection compression molding are required, which necessitate post-processing such as burr removal, which can lead to disadvantages such as reduced mass productivity and a complicated mold structure.

The present invention was made in view of the above-described problems, and an object thereof is to provide an optical composite molding, and production method thereof, that can prevent the occurrence of problems when producing an optical article by insert molding a composite sheet having an optical functional layer and a protective layer into a backup material, without relying on special molding methods such as compression molding or injection compression molding.

The optical composite molding disclosed in the present application is formed by bonding a composite sheet (10) including a first protective layer (11) on a front side, a second protective layer (12) on a back side, and an optical functional layer (13) sandwiched between the two protective layers, with a backup material (20) that supports the composite sheet (10) from the back side, wherein a first thickness (L1) of the first protective layer (11) is 0.05 to 0.30 mm, a second thickness (L2) of the second protective layer (12) is 0.30 to 0.70 mm, and the second thickness (L2) is larger than the first thickness (L1).

In the optical composite molding disclosed in the present application, it is preferred that the composite sheet (10) has a total thickness (LT) of 0.35 to 1.00 mm.

Further, in the optical composite molding disclosed in the present application, it is preferred that the first protective layer (11), the second protective layer (12), and the backup material (20) contain at least one selected from the group consisting of polycarbonate, polyamide, polyester, urethane, polypropylene, vinyl chloride, polystyrene, and acrylic.

The method for producing an optical composite molding disclosed in the present application includes a placement step and a pouring step. The placement step is a step of placing a composite sheet (10) at a predetermined position (31a) in an inner portion (31) of a mold (30). The composite sheet (10) includes a first protective layer (11) on a front side and has a first thickness (L1) of 0.05 to 0.30 mm, a second protective layer (12) on a back side and has a second thickness (L2) of 0.30 to 0.70 mm, and an optical functional layer (13) sandwiched between the two protective layers. The composite sheet has a total thickness (LT) of 0.35 to 1.00 mm. The second thickness (L2) is larger than the first thickness (L1). The pouring step is a step of pouring feedstock (20a) of the backup material (20) that supports the composite sheet (10) from the back side into the mold (30).

Further, in the method for producing an optical composite molding disclosed in the present application, it is preferred that the first protective layer (11), the second protective layer (12), and the backup material (20) contain at least one selected from the group consisting of polycarbonate, polyamide, polyester, urethane, polypropylene, vinyl chloride, polystyrene, and acrylic.

In the method for producing an optical composite molding disclosed in the present application, it is preferred that a temperature of the feedstock (20a) of the backup material (20) poured into the mold (30) during the pouring step is a temperature specific to the feedstock in injection molding, such as 280 to 300 degrees Celsius in the case of polycarbonate.

According to the optical composite molding of the present invention, and production method thereof, it is possible to suppress the occurrence of problems when producing an optical article by insert molding a composite sheet having an optical functional layer and a protective layer into a backup material, without relying on special molding methods such as compression molding or injection compression molding.

### BRIEF DESCRIPTION OF THE DRAWINGS

FIG. 1 is an external perspective view of an optical composite molding according to an embodiment of the present invention;
FIG. 2 is a front view of an optical composite molding according to an embodiment of the present invention;
FIG. 3(a) is a cross-sectional view taken along the line A-A in FIG. 2, and FIG. 3(b) is a partially enlarged view of FIG. 3(a);
FIG. 4(a) is an enlarged cross-sectional view showing an example of a composite sheet according to an embodiment, and FIG. 4(b) is an enlarged cross-sectional view showing another example of a composite sheet according to an embodiment;
FIG. 5 is an explanatory diagram showing a placement step in a production method for producing an optical composite molding according to an embodiment of the present invention;
FIG. 6 is an explanatory diagram showing a first procedure of an pouring step in the production method for producing an optical composite molding according to an embodiment of the present invention; and
FIG. 7 is an explanatory diagram showing a second procedure of the pouring step in the production method for producing an optical composite molding according to an embodiment of the present invention.

### DETAILED DESCRIPTION OF THE INVENTION

An optical composite molding according to an embodiment of the present invention will now be described in detail below with reference to the drawings. It is noted that the embodiment described below is a preferred specific example for carrying out the present invention, and therefore various technical limitations are imposed. However, the present invention is not limited to this embodiment unless otherwise specified in the following description.

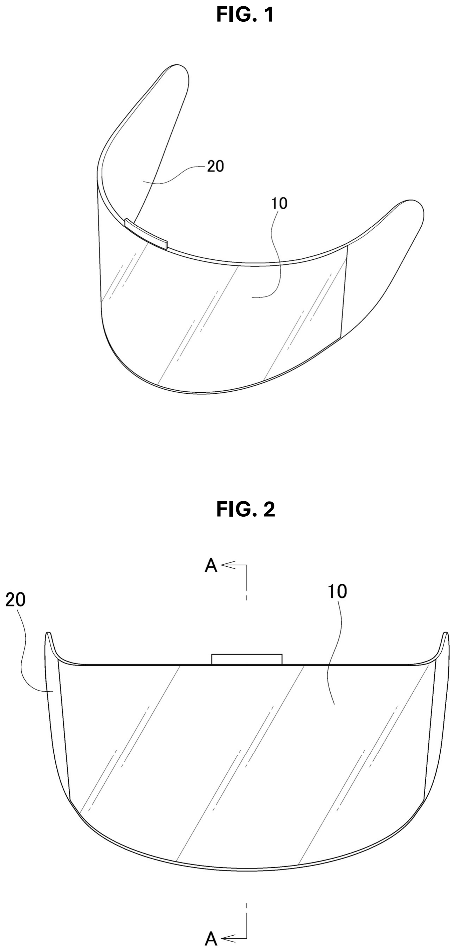

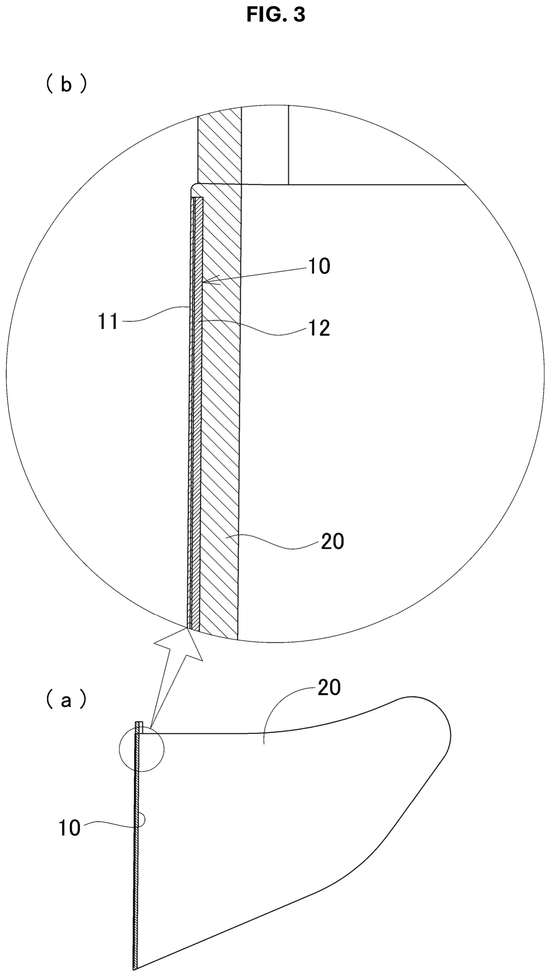

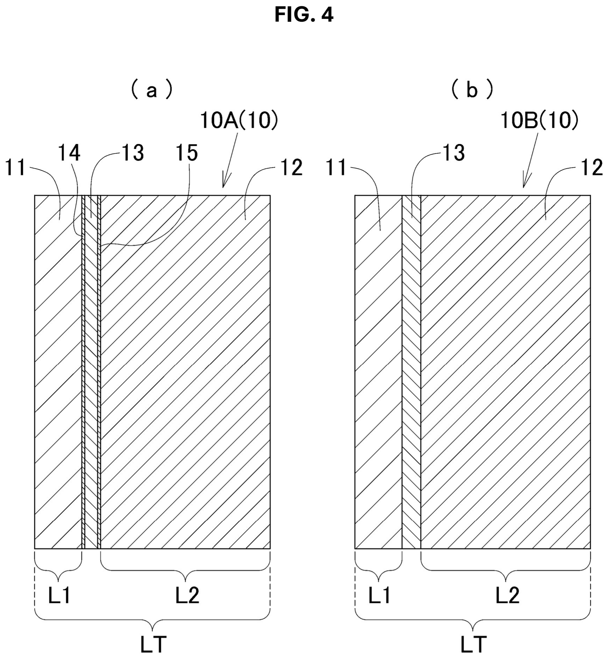

The optical composite molding according to the embodiment of the present invention is now described below with reference to FIGS. 1 to 4. FIG. 1 is an external perspective view of the optical composite molding according to the embodiment of the present invention. FIG. 2 is a front view of the optical composite molding according to the embodiment of the present invention. FIG. 3(a) is a cross-sectional view taken along the line A-A in FIG. 2. FIG. 3(b) is a partially enlarged view of FIG. 3(a). FIG. 4(a) is an enlarged cross-sectional view showing an example of a composite sheet according to the embodiment. FIG. 4(b) is an enlarged cross-sectional view showing another example of the composite sheet according to the embodiment.

As shown in FIGS. 1 and 2, the optical composite molding according to the embodiment of the present invention is a lens visor for a motorcycle helmet or the like, which is formed by bonding a composite sheet 10 that has a specific optical function with a backup material 20, which serves as the lens body for supporting the composite sheet 10. The present invention is not limited to a lens visor for a helmet, and may be applied to various optical articles, such as helmet shields and eyeglass lenses.

As shown in FIGS. 3 and 4, the composite sheet 10 of the embodiment includes a first protective layer 11 on a front side, which is placed in a position exposed to the outside air, a second protective layer 12 on a back side, and an optical functional layer 13 that is sandwiched between and protected by the two protective layers. A backup material 20 is bonded to the composite sheet 10 to support the composite sheet 10 from the back side.

A first thickness L1 of the first protective layer 11 is 0.05 to 0.30 mm, a second thickness L2 of the second protective layer is 0.30 to 0.70 mm, with the second thickness L2 being larger than the first thickness L1. Further, the composite sheet 10 has a total thickness LT of 0.35 to 1.00 mm. The first thickness L1 is more preferably 0.05 to 0.20 mm, the second thickness L2 is more preferably 0.35 to 0.55 mm, and the total thickness LT is more preferably 0.40 to 0.75 mm.

A composite sheet 10A shown in FIG. 4(a), which is a first example of the composite sheet 10, has a five-layer structure with a first adhesive layer 14 between the first protective layer 11 and the optical functional layer 13, and a second adhesive layer 15 between the second protective layer 12 and the optical functional layer 13. On the other hand, a composite sheet 10B shown in FIG. 4(b), which is a second example of the composite sheet 10, adhesive layers are not visible as independent entities, and so the composite sheet 10B has a three-layer structure consisting of the first protective layer 11, the second protective layer 12, and the optical functional layer 13.

The first protective layer 11, the second protective layer 12, and the backup material 20 contain at least one selected from the group consisting of transparent thermoplastic resins such as polycarbonate, polyamide, polyester, urethane, polypropylene, vinyl chloride, polystyrene, and acrylic.

The second protective layer 12 and the backup material 20 are often made of the same material from the viewpoint of fusion properties, and the first protective layer 11 is often made of the same material as the second protective layer 12 and backup material 20 from the viewpoint of ease of production and economic efficiency.

Polycarbonate has good physical properties such as impact resistance and also has excellent transparency, and thus is a more preferable material than the other materials mentioned above. Further, among the materials mentioned above, polyamide is a more preferable material in terms of the point that it has excellent chemical resistance and exhibits excellent toughness and impact resistance due to hydrogen bonding of the amide groups. In addition, among the materials mentioned above, polyester is a more preferable material in terms of the point that it is versatile, economical, and has excellent heat resistance and strength.

The optical functional layer 13 of the embodiment has an optical function such as polarization, photochromism, half mirror, and specific wavelength cutoff. The optical functional layer 13 is not limited to having a single optical function, and can have a plurality of optical functions, such as polarization + photochromism, or polarization + half mirror. Photochromism can be achieved by a photochromic compound, and half mirror can be achieved by a single-layer or multi-layer deposition of a metal or an inorganic material (for example, silicon dioxide or titanium oxide), or by cholesteric liquid crystals. The optical functional layer 13 can also be formed by, for example, graphic printing onto a protective layer.

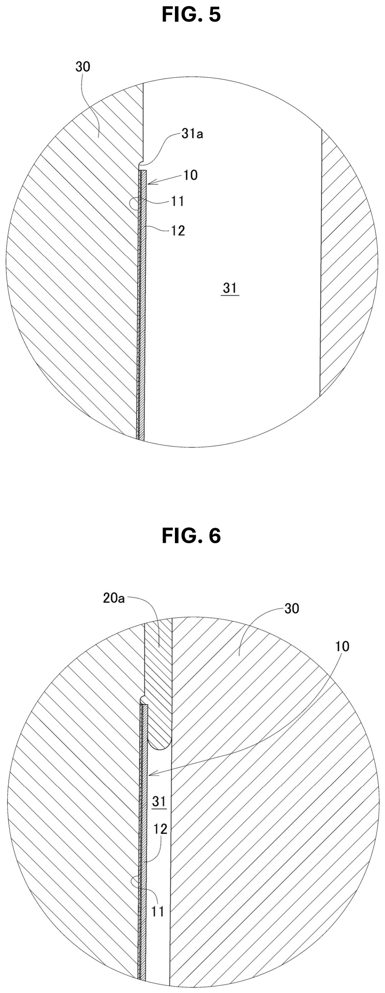

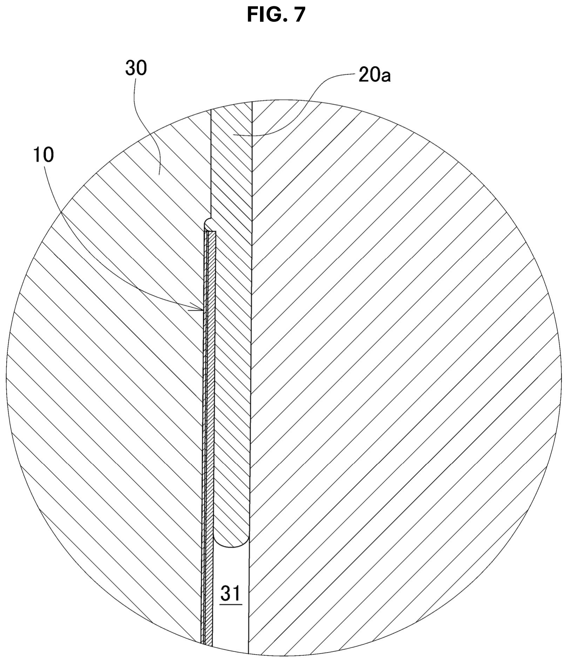

Next, a method for producing an optical composite molding according to an embodiment of the present invention will be described with reference to FIGS. 5 to 7. FIG. 5 is an explanatory diagram showing a placement step in the production method for producing an optical composite molding according to the embodiment of the present invention. FIG. 6 is an explanatory diagram showing a first procedure of a pouring step in the production method for producing an optical composite molding according to the embodiment of the present invention. FIG. 7 is an explanatory diagram showing a second procedure of the pouring step in the production method for producing an optical composite molding according to the embodiment of the present invention.

The method for producing an optical composite molding of the embodiment includes a placement step and a pouring step.

As shown in FIG. 5, the placement step involves placing the composite sheet 10 at a predetermined position in an inner portion 31 of a mold 30, which in this embodiment is a sheet recess 31a provided on the cavity side of the mold 30. In the example shown in FIG. 5, the composite sheet 10 is placed in the inner portion 31 of the mold 30 so that the first protective layer 11 is in full contact with the bottom surface of the sheet recess 31a.

The method for placing the composite sheet 10 at the predetermined position in the inner portion 31 of the mold 30 is not limited to placing the composite sheet 10 in the sheet recess 31a. The composite sheet 10 may also be placed by arranging it over, for example, the entire surface on a core side of the mold 30. Further, the composite sheet 10 can also be placed at the predetermined position in the inner portion 31 of the mold 30 by various methods, such as by providing minute holes for vacuum suction in the mold 30 and fixing the composite sheet 10 by vacuum suction, or by arranging the composite sheet 10 in the inner portion of the cavity and then fixing the composite sheet 10 by sandwiching a part of it into a cavity with a part of the core, such as a fixing pin provided at the end of the core.

As described above, the composite sheet 10 includes the first protective layer 11 on a front side having a first thickness L1 of 0.05 to 0.30 mm, the second protective layer 12 on a back side having a second thickness L2 of 0.30 to 0.70 mm, and the optical functional layer 13 sandwiched between the two protective layers. The total thickness LT is 0.35 to 1.00 mm, and the second thickness L2 is larger than the first thickness L1.

As shown in FIGS. 6 and 7, the pouring step in the embodiment is a step of pouring feedstock 20a of the backup material 20, which supports composite sheet 10 from the back side, into the mold 30.

As described above, the first protective layer 11, the second protective layer 12, and the backup material 20 contain at least one selected from the group consisting of polycarbonate, polyamide, polyester, urethane, polypropylene, vinyl chloride, polystyrene, and acrylic.

When the backup material 20 is formed from a resin feedstock such as polycarbonate, the preferred temperature of the feedstock 20a of the backup material 20 poured into the mold during the pouring step is 280 to 300 degrees Celsius.

As described above with reference to FIGS. 1 to 7, according to the optical composite molding and production method thereof of the embodiment, the first thickness L1 of the first protective layer 11 is 0.05 to 0.30 mm, the second thickness L2 of the second protective layer is 0.30 to 0.70 mm, and the second thickness L2 is larger than the first thickness L1. As a result, it is possible to suppress the occurrence of problems when producing an optical article by insert molding the composite sheet 10 having an optical functional layer and a protective layer into the backup material 20, without relying on special molding methods such as compression molding or injection compression molding.

More specifically, the temperature of the resin feedstock such as polycarbonate during injection molding is generally around 300 degrees Celsius at the tip of the molding machine nozzle. Although there is a slight temperature drop as the material is injected from the nozzle of the molding machine and passes through the sprue and runner inside the mold 30, shear heating occurs as the passage narrows at the gate, and the feedstock 20a is injected and poured into the inner portion 31 of the mold 30 at a temperature of 280 to 300 degrees Celsius.

Further, the temperature of the mold 30 is cooled to approximately 90 to 120 degrees Celsius, which is equal to or below the glass transition temperature of polycarbonate (solidification temperature: approximately 135 degrees Celsius) and the like, and the feedstock 20a solidifies within the mold.

By setting the second thickness L2 of the second protective layer 12 on the back side of the composite sheet 10 to 0.30 mm or more, the second protective layer 12 can be prevented from fully melting due to the heat and pressure of the feedstock 20a, and the optical functional layer 13 can be prevented from being damaged and losing its optical function. On the other hand, by setting the second thickness L2 to 0.70 mm or less, an increase in the total thickness LT of the composite sheet 10 can be prevented.

Further, by setting the first thickness L1 of the first protective layer on the front side of the composite sheet 10 to 0.30 mm or less, the optical functional layer 13 can be prevented from being damaged and losing its function. This is now described in detail below.

As shown in FIGS. 3 to 7, the peripheral edge of the optical functional layer 13 is exposed at the peripheral edge of the insert-molded composite sheet 10, and the feedstock 20a poured into the mold 30 comes into direct contact with the optical functional layer 13 at the peripheral edge of the composite sheet 10. In injection molding, the feedstock 20a passes through a sprue and a runner, and then is injected and poured from a gate into an inner portion of the mold 30. Therefore, the peripheral edge of the composite sheet 10 near the gate comes into contact with the feedstock 20a, which in the case of polycarbonate, for example, has a temperature of about 280 to 300 degrees Celsius. The peripheral edge of the optical functional layer 13 is also impacted by the high-temperature, high-pressure feedstock 20a.

One possible method for mitigating the impact on the optical functional layer 13 is to increase the distance from the gate to the peripheral edge of the composite sheet 10 in order to distribute the pressure of the feedstock 20a and to reduce the temperature of the feedstock 20a that comes into contact with the peripheral edge of the composite sheet 10. However, if the distance from the gate to the peripheral edge of the composite sheet 10 is increased, the proportion of the optical functional layer 13 in the overall lens area decreases, reducing the effective dimensions in which the optical function is obtained. As a result, in the case of helmet lens visors, shields, and the like, the absence of a functional feedstock in some portions results in a decrease in performance and design.

Further, if the distance from the gate to the peripheral edge of the composite sheet 10 is increased, the temperature and pressure of the feedstock 20a will decrease, which may reduce the adhesion and fusion strength between the composite sheet 10 and the backup material 20, which could increase residual stress in the molded product, leading to concerns about reduced product strength, for example.

Compression molding and injection compression molding are other methods for mitigating the impact of the feedstock 20a on the peripheral edge of the optical functional layer 13 and the like without increasing the distance from the gate to the peripheral edge of the composite sheet 10. However, as described above, compression molding and injection compression molding require post-processing such as burr removal, which can lead to disadvantages such as reduced mass productivity and a complicated mold structure.

By setting the first thickness L1 of the first protective layer 11 to a relatively small value of 0.30 mm or less to prevent damage to the optical functional layer 13 and the like without relying on special molding methods such as compression molding or injection compression molding, the volume of the feedstock 20a that comes into direct contact with the optical functional layer 13 and with the peripheral edge of the first protective layer 11 near the gate can be, as shown in FIGS. 6 and 7, relatively small, thereby preventing excessive heat and pressure from being directly applied to the optical functional layer 13 and the like.

Further, by setting the first thickness L1 of the first protective layer 11 to a relatively small 0.30 mm or less, the first protective layer 11 and the optical functional layer 13 can be cooled more effectively by the mold 30, which as described above has a relatively low temperature (approximately 90 to 120 degrees Celsius in the case of polycarbonate). This prevents the optical functional layer 13 and the like from being damaged, resulting in loss of optical function or disadvantages on appearance, without relying on special molding methods such as compression molding or injection compression molding.

Moreover, by setting the first thickness L1 to a relatively small 0.30 mm or less, it is easier to reduce the total thickness LT of the composite sheet 10, the space for the backup material 20 in the inner portion 31 of the mold 30 can be increased, the proportion of the backup material 20 in the overall thickness of the optical composite molding can be increased, it is easier to reduce the thickness of the optical composite molding, the optical performance of the product can be improved, and the weight of the product can be reduced.

In addition, as described with reference to FIGS. 1 to 7, in the embodiment, the total thickness LT of the composite sheet 10 is 0.35 to 1.00 mm. By setting the total thickness LT of the composite sheet 10 to 0.35 to 1.00 mm, the occurrence of problems can be more reliably suppressed during insert molding without relying on special molding methods such as compression molding or injection compression molding.

In more detail, by setting the total thickness LT to 0.4 mm or more, sufficient strength and stiffness of the composite sheet 10 itself can be ensured, and the occurrence of problems such as wrinkles and folds can be prevented when the composite sheet 10 is thermoformed into a three-dimensional shape such as a spherical or aspherical surface as a pre-processing step for insert molding. Further, by setting the total thickness LT to 0.4 mm or more, good insertability can be achieved when placing, whether manually or automatically, the composite sheet 10 at a predetermined position (in this embodiment, the sheet recess 31a) in the inner portion 31 of the mold 30. Moreover, causing defects on appearance such as wrinkles and folds or distortion in the composite sheet 10 due to the heat and pressure of the feedstock 20a during insert molding can be prevented.

In addition, by setting the total thickness LT to 1.0 mm or less, the occurrence of problems when thermoforming into the above-described three-dimensional shapes can be suppressed. If the total thickness LT exceeds 1.0 mm, the hardness of the composite sheet 10 itself increases, and when thermoforming into the above-described three-dimensional shapes, the heat and pressure to be applied must also be increased, which lengthens the processing time, causes a decrease in the performance of the functional material, and causes problems on appearance such as wrinkles and folds.

Further, if the total thickness LT exceeds 1.0 mm, the force with which the feedstock 20a strikes the peripheral edge of the composite sheet 10 during insert molding increases, making it more likely that the composite sheet 10 will shift from its predetermined position. Moreover, as described above, the space for the backup material 20 in the cavity of the mold 30 becomes thinner, which hinders the thinning of the product. In particular, when the composite sheet 10 has undergone a stretching process or the above-described three-dimensional shape thermoforming process, the composite sheet 10 tends to develop defects on appearance such as wrinkles and folds, or distortion, and there is an increasing need to rely on special molding methods such as compression molding and injection compression molding.

Therefore, by setting the total thickness LT of the composite sheet 10 to 0.35 to 1.00 mm, the occurrence of problems can be more reliably suppressed during insert molding without relying on special molding methods such as compression molding or injection compression molding.

An embodiment of the present invention has been described above with reference to the drawings (FIGS. 1 to 7). However, the present invention is not limited to the above embodiment, and various modifications can be made without departing from the spirit and scope of the present invention.

### [Reference Signs List]

- L1: first thickness
- L2: second thickness
- LT: total thickness
- 10: composite sheet
- 11: first protective layer
- 12: second protective layer
- 13: optical functional layer
- 20: backup material
- 20a: feedstock
- 30: mold
- 31: mold inner portion
- 31a: sheet recess (predetermined position)

## Claims

1. An optical composite molding formed by bonding a composite sheet (10) comprising a first protective layer (11) on a front side, a second protective layer (12) on a back side, and an optical functional layer (13) sandwiched between the two protective layers, with a backup material (20) that supports the composite sheet (10) from the back side, wherein
a first thickness (L1) of the first protective layer (11) is 0.05 to 0.30 mm, a second thickness (L2) of the second protective layer (12) is 0.30 to 0.70 mm, and the second thickness (L2) is larger than the first thickness (L1).

2. The optical composite molding according to claim 1, wherein the composite sheet (10) has a total thickness (LT) of 0.35 to 1.00 mm.

3. The optical composite molding according to claim 1 or claim 2, wherein the first protective layer (11), the second protective layer (12), and the backup material (20) comprise at least one selected from the group consisting of polycarbonate, polyamide, polyester, urethane, polypropylene, vinyl chloride, polystyrene, and acrylic.

4. A method for producing an optical composite molding comprising:
a placement step of placing a composite sheet (10) at a predetermined position (31a) in an inner portion (31) of a mold (30), wherein the composite sheet (10) comprises a first protective layer (11) on a front side and has a first thickness (L1) of 0.05 to 0.30 mm, a second protective layer (12) on a back side and has a second thickness (L2) of 0.30 to 0.70 mm, and an optical functional layer (13) sandwiched between the two protective layers, the composite sheet has a total thickness (LT) of 0.35 to 1.00 mm, and the second thickness (L2) is larger than the first thickness (L1); and
a pouring step of pouring feedstock (20a) of the backup material (20) that supports the composite sheet (10) from the back side into the mold (30).

5. The method for producing an optical composite molding according to claim 4, wherein the first protective layer (11), the second protective layer (12), and the backup material (20) comprise at least one selected from the group consisting of polycarbonate, polyamide, polyester, urethane, polypropylene, vinyl chloride, polystyrene, and acrylic.

6. The method for producing an optical composite molding according to claim 4 or claim 5, wherein a temperature of the feedstock (20a) of the backup material (20) poured into the mold (30) during the pouring step is 280 to 300 degrees Celsius.
